Europäisches Patentamt

European Patent Office

Office européen des brevets

(11) Veröffentlichungsnummer: **0 141 171**
**A2**

(12) # EUROPÄISCHE PATENTANMELDUNG

(21) Anmeldenummer: **84110710.5**

(22) Anmeldetag: **07.09.84**

(51) Int. Cl.⁴: **B 05 D 1/02**
**B 05 B 15/12, B 05 B 15/04**

(30) Priorität: **08.09.83 DE 3332457**

(43) Veröffentlichungstag der Anmeldung:
**15.05.85 Patentblatt 85/20**

(84) Benannte Vertragsstaaten:
**AT BE CH FR GB IT LI NL SE**

(71) Anmelder: **Richter, Wolfgang Dipl. Ing.**
**Augsburger Strasse 23**
**D-8946 Memmingerberg(DE)**

(72) Erfinder: **Richter, Wolfgang Dipl. Ing.**
**Augsburger Strasse 23**
**D-8946 Memmingerberg(DE)**

(74) Vertreter: **Dr. E. Wiegand Dipl.-Ing. W. Niemann Dr. M.**
**Kohler Dipl.-Ing. J. Glaeser Dr. H.-R. Kressin**
**Patentanwälte**
**Herzog-Wilhelm-Strasse 16**
**D-8000 München 2(DE)**

(54) **Verfahren zur Rückgewinnung von Lackiermaterial aus dem beim Spritzlackieren entstehenden Overspray und Vorrichtung zur Durchführung de Verfahrens.**

(57) Die Erfindung betrifft ein Verfahren zur Rückgewinnung von Lackiermaterial aus Overspray, wobei man das nicht auf das zu lackierende Objekt auftreffende Lackiermaterial mittels einer Auffangvorrichtung, die auf allen Seitenflächen und Bodenflächen mit im Kreislauf geführtem Wasser überspült ist, auffängt, das Overspraymaterial in dem aus der Auffangvorrichtung abgezogenen Overspray- Kreislaufwasser-Gemisch bis auf etwa 20% aufkonzentriert, das Gemisch dann einer Filtrationskammer zuleitet, in der das Wasser vom rückgewonnen Rohlack getrennt wird und dann die physikalischen Eigenschaften des zurückgewonnenen Rohlacks mißt, mit den physikalischen Eigenschaften des frischen Lackiermaterials vergleicht, die Eigenschaften des zurückgewonnenen Rohlacks dann auf die Eigenschaften des frischen Lackiermaterials einstellt und den zurückgewonnenen Rohlack dann dem frischen Lackiermaterial zumischt. Die Erfindung betrifft weiterhin eine Vorrichtung zur Durchführung des Verfahrens.

Croydon Printing Company Ltd.

Verfahren zur Rückgewinnung von Lackiermaterial
aus dem beim Spritzlackieren entstehenden Overspray
und Vorrichtung zur Durchführung des Verfahrens

Beschreibung

Die Erfindung betrifft ein Verfahren zur Rückgewinnung von Lackiermaterial aus dem beim Spritzlackieren entstehenden Overspray und eine Vorrichtung zur Durchführung des Verfahrens.

Beim Spritzlackieren trifft nur ein Teil des feinversprühten Lackiermaterials auf dem Lackierobjekt auf. Der Anteil, der nicht zum Objekt gelangt, nennt man Overspray. Dieses Overspray gilt als Lackierverlust. Außerdem muß der Overspray entsorgt werden, da er Umweltprobleme mit sich bringt. Je nach der Form der Lackierobjekte sowie nach der Art des Spritzlackiersystems beträgt der Anteil Overspray vom Verbrauch des Lackiermaterials etwa 30 bis 90 %.

Es besteht daher das Bedürfnis nach einem großtechnisch anwendbaren Verfahren zur Rückgewinnung von Lackiermaterial aus dem beim Spritzlackieren entstehenden Overspray, wobei das Overspray möglichst vollständig zurückgewonnen werden soll und in das frische zu versprühende Lackiermaterial eingespeist werden soll. Das Verfahren soll weiterhin umweltfreundlich und kostengünstig sein. Weitere Problemstellungen ergeben sich aus der nachfolgenden Beschreibung des Verfahrens und der Vorrichtung zur Durchführung des Verfahrens und der Beschreibung der Vorteile des erfindungsgemäßen Verfahrens.

Die Aufgabe wird gelöst durch ein Verfahren der eingangs angegebenen Art, wobei das Overspray mittels Auffangvorrichtungen, die von im Kreislauf geführtem Wasser überspült sind, aufgefangen wird, das Kreislaufwasser-Overspray-Gemisch dann in einer Rückgewinnungsvorrichtung mit einer Filtrationskammer, Meßeinheit und Aufbereitungseinheit zurückgewonnen und danach dem frischen zu versprühenden Lackiermaterial zum gleichen Anwendungszweck wieder zugemischt wird. Die Erfindung betrifft außerdem eine Vorrichtung zur Durchführung des Verfahrens zur Rückgewinnung des Oversprays.

Die Auffangvorrichtungen bestehen aus Flächen mit drehbaren Segmenten. Die einzelnen drehbaren Segmente weisen vorzugsweise einen dreieckigen Querschnitt auf. Die Segmente sind so zusammengesetzt, daß sie eine Lackierkabine bilden, bei der, falls gewünscht, auch die Eingangsseite geschlossen werden kann.

Die Größe der Lackierkabine richtet sich nach dem zu besprühenden Objekt. Nach dem erfindungsgemäßen Verfahren können auch Großobjekte, wie Omnibusse und Waggons, in rationeller Weise lackiert werden. Das erfindungsgemäße Verfahren eignet sich aber auch für kleine Lackierkabinen, in denen einzelne Bauteile lackiert werden.

Nach einer Ausgestaltung der erfindungsgemäßen Vorrichtung kann die Auffangvorrichtung auch aus durchgehenden, glatten, nicht drehbaren Flächen bestehen, die über im oberen Bereich der Flächen angeordneten Beflutungsschlitzen überflutet werden und wobei die Bodenfläche mittels einer Sprühvorrichtung überspült wird.

Die wesentlichen Teile der Lackierkabine, die dem Lackierobjekt zugewandt sind, werden mit berechneten Mengen an im Kreislauf geführtem Wasser, insbesondere voll entsalztem Wasser, beflutet.

Ein Teil des während des Ablaufs des Lackierprozesses entstehenden Oversprays schlägt sich in dem die Flächen überflutenden Wasserfilm nieder. Ein weiterer Teil des Oversprays wird von der Absaugluft in Form von Schwebstoffen mitgerissen und als Aerosol in der Absaugluft verteilt. Die abgesaugte Luft passiert zuerst einen Rückspüler, dessen Funktion sich nach Art der Kaskaden oder auch Wirbelwäscher gestaltet. Dann tritt die bereits vorgereinigte Abluft in ein erfindungsgemäßes Naßnachfilter ein und wird dadurch vom restlichen Overspray gereinigt. Die so hergestellte gereinigte Abluft kann der benötigten frischen Zuluft zum größten Teil wieder beigemischt werden. Die aus der Abluft beim Durchgang durch den Rückspüler und Naßnachfilter ausgespülten ausgewaschenen Oversprayanteile werden in das Kreislaufwasser eingeführt, in dem sich bereits niedergeschlagenes Overspray befindet.

Damit sich das im Kreislauf geführte Wasser nicht über eine Rate von maximal 20 % Oversprayanteil anreichert, wodurch bereits innerhalb der Lackierkabine eine Verfilmung des aus Lackiermaterial bestehenden Oversprays eintreten könnte, wird dem im Kreislauf geführtem Gemisch kontinuierlich eine Teilmenge abgetrennt und einer Filtration zugeführt. Die in der erfindungsgemäßen Vorrichtung verwendeten Filter bestehen aus neuen Spezialmembranen, die für das erfindungsgemäße Verfahren entwickelt worden sind. In den Filtern wird das Overspray-Kreislaufwasser-Gemisch aufgetrennt in gereinigtes Wasser, das in den Wasserkreislauf zugerückgeführt wird, und in konzentriertes Overspray, das als Rohlack zurückgewonnen wird. Der zurückgewonnene Rohlack wird in eine automatisch gesteuerte Aufbereitung geleitet, in der die physikalischen und chemischen Eigenschaften des Rohlacks kontinuierlich kontrolliert und mit den entsprechenden Werten des frischen Lackiermaterials verglichen werden. Mittels der in der Aufbereitung erhaltenen Meßdaten werden die Eigenschaften des zurückgewonnenen Rohlacks z.B. durch Verdünnen bzw. Konzentrieren auf die Eigenschaften des frischen Lackiermaterials eingestellt.

Das Overspray-Kreislaufwasser-Gemisch muß mindestens bis zum Erreichen der Filtereinheit eine homogene Verteilung aufweisen. Dies wird erfindungsgemäß dadurch erreicht, daß in der das Gemisch führenden Leitung ein Inline-Dispergierer vorgesehen ist.

Es ist von Vorteil, wenn das Overspray-Kreislaufwasser-Gemisch im Anschluß an die Inline-Dispergierung durch eine Entspannungskammer geleitet wird, in der die in Schaummizellen eingeschlossene Luft oder andere gasförmige Inhaltsstoffe kontinuierlich aus dem Gemisch abgetrennt werden. Die Menge des im Kreislauf geführten Wassers ist so eingestellt, daß die pro Zeiteinheit anfallende Menge an Overspray nicht über 20 % der Menge des Kreislaufwassers ausmacht. Bei höherer Aufkonzentration kommt es dazu, daß sich die feinverteilten Lackierteilchen in dem Overspray-Kreislaufwasser-Gemisch teilweise berühren, so daß die Gefahr besteht, daß eine Teiltrocknung bzw. Teilverfilmung bereits innerhalb der Lackierkabinen eintritt. Der notwendige Bedarf an im Kreislauf geführten Spülwasser geht z.B. aus dem folgenden Berechnungsbeispiel hervor, das von einer Lackierkabine mit einer Länge von 2 m, einer Breite von 1,5 m und einer Höhe von 1,5 m, d.h. mit einem Rauminhalt von 4,5 m³, ausgeht. Die Menge an Kreislaufwasser beträgt bei 3 bis 5 % des Rauminhalts etwa 135 bis 225 l, d.h. daß diese Wassermenge bei einer Aufkonzentration mit maximal 20 % eine Overspraymenge von 27 bis 45 l aufnimmt. Die im Lackierprozeß anfallende Oversprayrate beträgt im Mittel etwa 50 %. Bei den vorgegebenen Verhältnissen könnten somit bis zu 90 l Lackiermaterial pro Stunde verarbeitet werden.

Die Filtration müßte bei dem vorliegenden Berechnungsbeispiel eine Leistung von mindestens 225 l/h und höchstens 300 l/h aufweisen. Die anschließende Aufbereitung
des aus dem Overspray zurückgewonnenen Rohlacks müßte
eine Leistung von 45 l/h aufweisen.

Dies bedeutet, daß der anfängliche Verbrauch von 90 l
Lackiermaterial/h während der Betriebszeit der Rückgewinnung dann auf einen Verbrauch von 45 l frischem Lackiermaterial zurückgeht und die gleiche Menge an wiedergewonnenem Lackiermaterial beigemischt wird.

Bei herkömmlichen Lackierkabinen wird lediglich mit einer
im unkontrollierten Überlauf überspülten Wand gearbeitet,
wobei eine sehr hohe Wassermenge verwendet wird, da das
von dem Wasser mitgerissene Overspray in dem Spülwasser
in eine überdimensionalen Sammelbodenbehälter koaguliert
werden muß und dann als schlammige Abfallmasse verworfen
wird. Die Entsorgung dieses Abfallwassers ist mit erheblichen Kosten und Umweltbelastungen verbunden. Ein weiterer
Nachteil der herkömmlichen Lackierkabinen liegt darin, daß
sie bei einem Rauminhalt von etwa 4,5 m³ einen Frischluftbedarf von etwa 7.000 m³/h haben. Die der Lackierkabine
zugeführte Frischluft muß bei der herkömmlichen Lackierkabine vorher gereinigt und je nach Jahreszeit beheizt
oder gekühlt werden, was zu erheblichen Energiekosten
führt. Außerdem ist der Abluftstrom bei den bekannten
Lackierkabinen mit Schadstoffen belastet, so daß diese Abluft nicht im Kreislauf geführt werden kann, sondern in die
Umgebung abgeblasen wird.

Dagegen wird bei dem erfindungsgemäßen Verfahren nur noch
maximal 10 % der Wassermenge im Umlauf und nur noch 10 bis
25 % der bei dem bekannten Verfahren verwendeten Zuluftmenge
in Form von Frischluft verwendet. Das obige Berechnungsbeispiel zeigt, daß das erfindungsgemäße Verfahren wesentlich wirtschaftlicher und rationeller arbeitet als die bekannten Verfahren, so daß sich bei dem erfindungsgemäßen Verfahren eine Amortisationszeit für die Lackiervorrichtung ergibt, die innerhalb einer Jahresfrist liegt.

Mit dem erfindungsgemäßen Verfahren bzw. der erfindungsgemaßen Vorrichtung kann praktisch das gesamte Overspray erneut für die Lackierung zum gleichen Anwendungszweck oder auch für andere Objekte wieder verwendet werden. Das erfindungsgemäße Verfahren arbeitet rationell. Es ist energiesparend und umweltfreundlich. Bei dem erfindungsgemäßen Verfahren entsteht insbesondere kein schadstoffhaltiges Abwasser oder schadstoffhaltige Abluft. Die erfindungsgemäßen Vorrichtungen sind arbeitsplatzfreundlich, da durch gezielte Luftführungen ein Fernhalten des Sprühnebels und der Aerosole vom Bedienungspersonal möglich ist. Das erfindungsgemäße Verfahren ist für alle üblichen Spritzlackiersysteme und Lackiermaterialien einsetzbar, insbesondere jedoch für wasserlösliche Lackiermaterialien.

Die Erfindung betrifft auch eine Vorrichtung zur Durchführung des vorstehend beschriebenen Verfahrens. In den Zeichnungen ist ein Ausführungsbeispiel einer erfindungsgemäßen Vorrichtung zur Durchführung des Verfahrens schematisch dargestellt. Es zeigen:

Fig. 1     eine Darstellung des erfindungsgemäßen Verfahrens mit den verschiedensten Vorrichtungsteilen,

Fig. 2     eine Lackierkabine mit beweglichen Wandsegmenten,

Fig. 3     die Draufsicht auf drei Wandsegmente,

Fig. 4     einen Querschnitt durch ein Wandsegment,

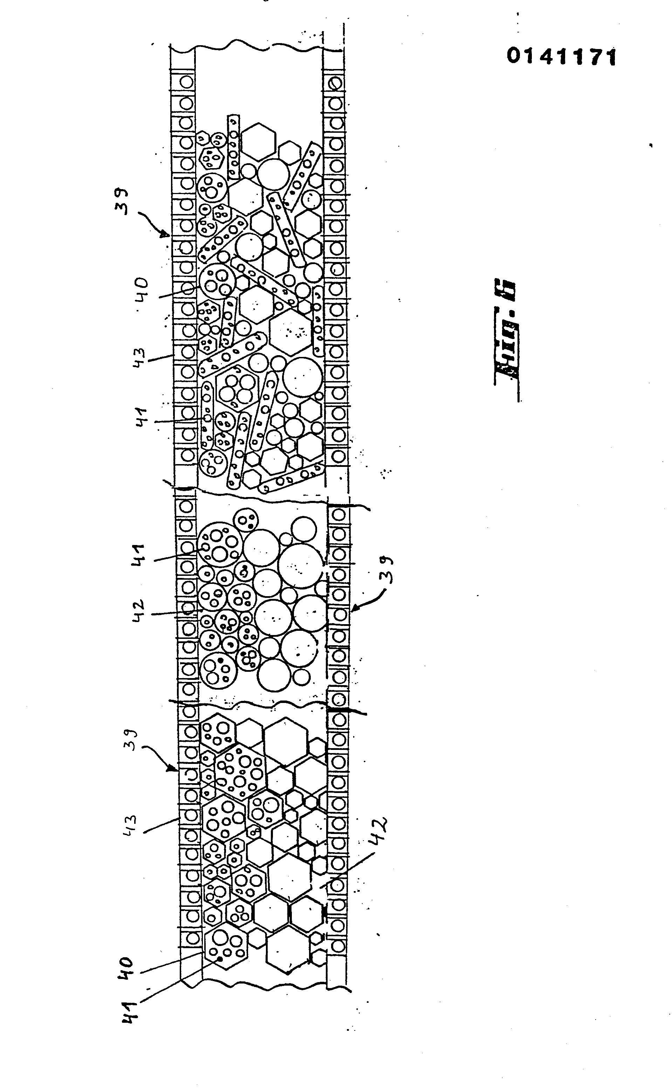

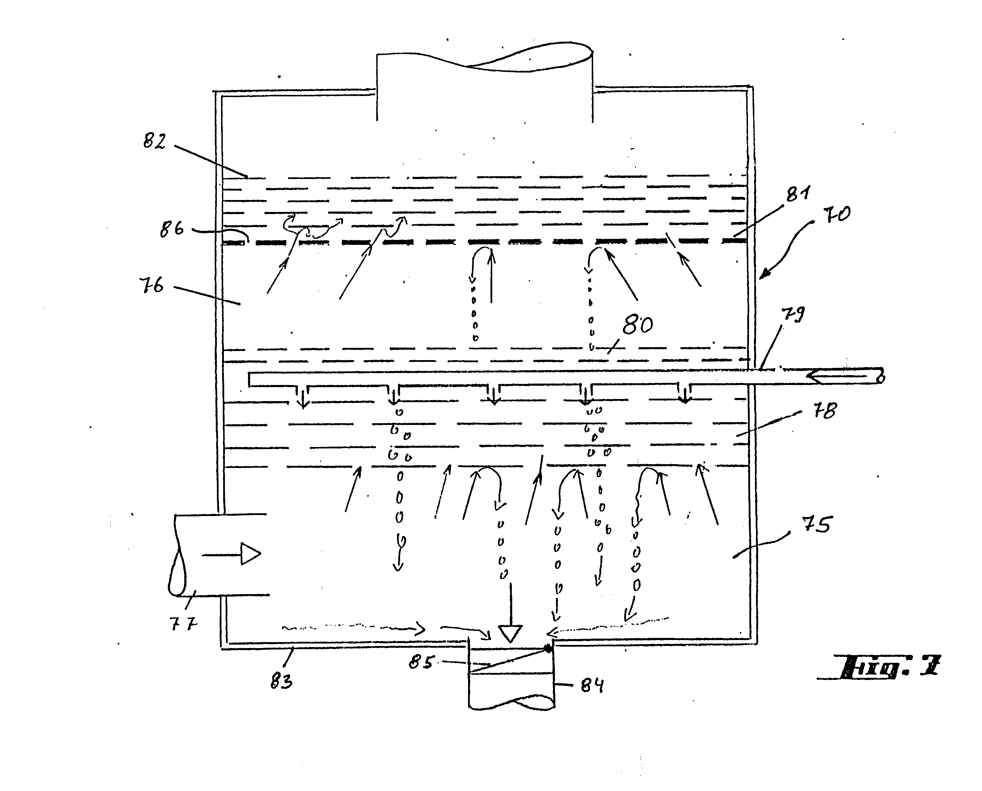

Fig. 5      eine perspektivische Ansicht eines Wandsegments,

Fig. 6      einen Querschnitt durch die Filtermembran der
            Filterkammer,

Fig. 7      einen Querschnitt durch das Naßnachfilter,

Fig. 8      einen Querschnitt durch eine Ausgestaltung der
            Auffangvorrichtung,

Fig. 9      eine Draufsicht auf die Auffangvorrichtung nach
            Fig. 8, und

Fig. 10     eine Ausgestaltung der Auffangvorrichtung.


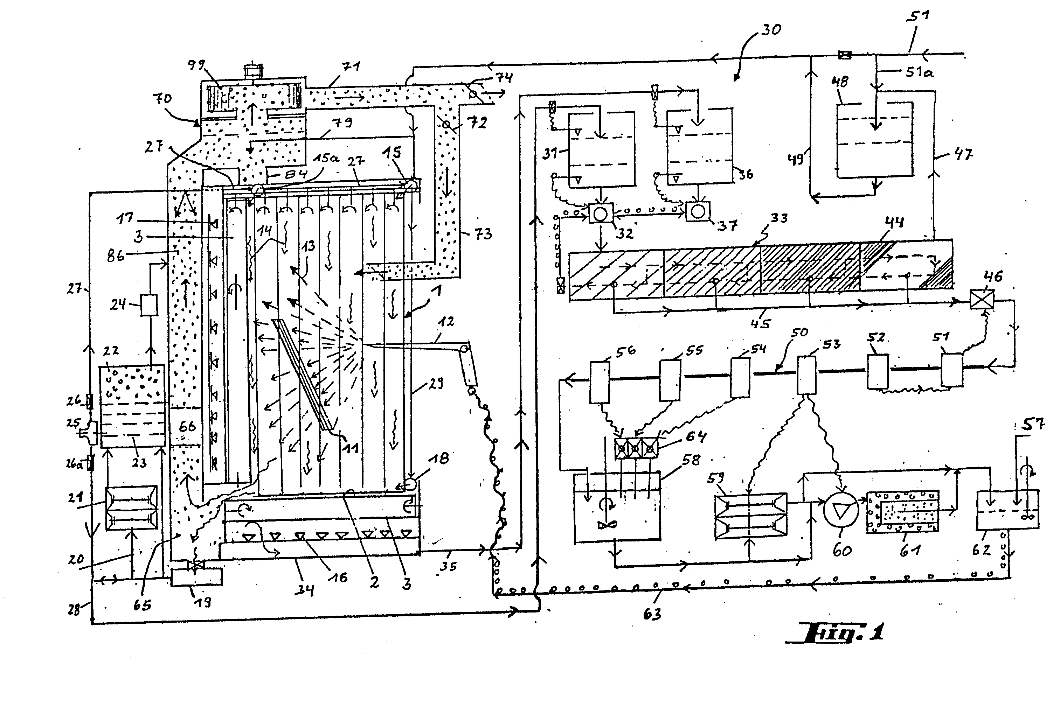

In der Fig. 1 ist die Overspray-Auffangvorrichtung insgesamt
mit 1 bezeichnet. Die Auffangvorrichtung kann aus Kammern
oder Kabinen bestehen, die aus einzelnen oder zusammengesetzten Bauteilen aufgebaut sind. Die Größe der Auffangvorrichtung richtet sich nach der Größe des Lackierobjekts und
der Durchsatzmenge bei kontinuierlichen Lackiervorgängen.
Die erfindungsgemäße Auffangvorrichtung ist für kleine Tischmodelle und auch für große Durchlaufanlagen, für z.B. Omnibusse und Waggons, geeignet. Das erfindungsgemäße Vorrichtungsprinzip wird bei allen Größenordnungen und Formgestaltungen eingehalten.


Die Auffangvorrichtung besteht im wesentlichen aus Auffangflächen, die aus drehbaren Segmenten bestehen, die als
Einzelelemente in Kassettenform zusammengesetzt sind   und
damit eine Auffangfläche bilden. Auf der dem Lackiervorgang
zugewandten Seite wird die Kassettenfläche mit Kreislaufwasser überspült, in dem das Overspray als Niederschlag aufgenommen wird. Von der Rückseite werden die Segmente mittels gesonderter Sprüheinrichtungen in einer integrierten Spülkammer saubergespült, während die dem Lackierobjekt zugewandte Seite bereits wieder als Auffangvorrichtung für das Overspray 13 verwendet wird.

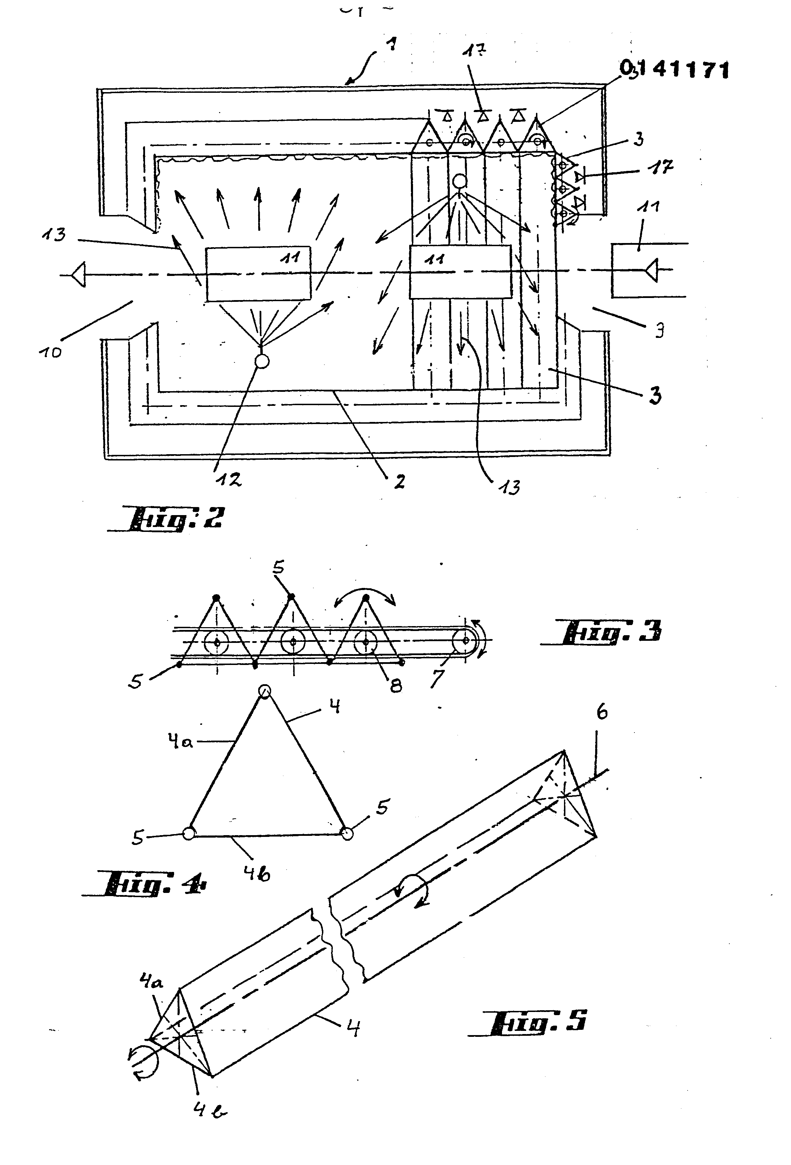

Die Lackierkabine besteht aus einer Bodenfläche 2, wobei die Bodenfläche aus einzelnen drehbaren Segmenten 3 zusammengesetzt ist. Das drehbare Segment besteht vorzugsweise aus einem dreieckigen Segment mit drei Wandflächen 4, 4a und 4b, wobei die Wandflächen über Kantenabdichtungen 5 zu einem Kassettensegment zusammengesetzt sind. Die Kantenabdichtung 5 besteht vorzugsweise aus Polyamid, einem Polyolefin oder aus halogenierten Kunststoffen. Die drehbaren Segmente sind vorzugsweise in Längsrichtung mit einer Drehachse 6 ausgerüstet. Die Wandflächen der Kassetten bestehen vorzugsweise aus Edelstahl oder auch aus Kunststoff, z.B. Polyamid, Polyolefin oder einem halogenierten Kohlenwasserstoffpolymerisat. Die drehbaren Segmente werden mittels eines Motors angetrieben, wobei sich die Segmente um eine Flächeneinheit aus ihrer Ausgangslage verdrehen, so daß bei dem dritten Drehtakt wieder die Ausgangsfläche erreicht ist. In der Fig. 3 ist die Antriebswalze mit 7 bezeichnet. Die Mitnehmerwalzen bzw. Mitnehmerzahnräder sind mit 8 bezeichnet.

Die Segmente 3 sind im Bodenteil der Lackierkabine zu einer Bodenfläche 2 kombiniert, wobei eine wasserdichte Fläche gebildet wird durch die Kantenabdichtungen der Einzelsegmente, die aus einem elastischen Material, vorzugsweise einem elastischen Kunststoffmaterial, bestehen. Oberhalb der Bodenfläche 2 kann ein Gitterrost als Standfläche für das Bedienungspersonal angeordnet sein.

Die vertikalen Wandflächen der Lackierkabine bestehen ebenfalls aus drehbaren Einzelsegmenten 3, die sich zu einer durchgehenden Wandfläche ergänzen, wobei die Stoßkanten durch die Kantenabdichtungen 5 gebildet werden. Die Lackierkabinen, die für ein kontinuierliches Spritzverfahren ausgerüstet sind, sind mit einer Eingangsöffnung 9 und einer Ausgangsöffnung 10 versehen, durch die das Lackierobjekt 11 in das Innere der Lackierkabine vor die Lackierspritzdüse 12 geführt wird. Bei Lackierkabinen, die für ein diskontinuierliches Spritzverfahren vorgesehen sind, ist die hintere Rückwand der Lackierkabine nicht mit einer Öffnung ausgerüstet.

Die vertikal angeordneten Wandflächen der Lackierkabine, die aus drehbaren Segmenten bestehen, werden mit im Kreislauf geführtem Wasser 14 überflutet. Das Wasser bildet auf den vertikalen Wandflächen einen dünnen, durchgehenden Wasserfilm, der das Overspray aufnimmt. Die Überflutung der vertikalen Wandflächen mit Kreislaufwasser-Overspray-Gemisch und/oder Frischwasser erfolgt durch Sprühvorrichtungen 15, 15a, die im oberen Teil der Lackierkabine angeordnet sind. Die Sprühvorrichtungen (Sprühdüsen) 15, 15a werden über die Leitung 27 mit Kreislaufwasser-Overspray-Gemisch bzw. über die Leitung 51 mit Frischwasser versorgt. Die Rückseite der Einzelsegmente wird mittels außerhalb der Lackierkabine angeordneter Düsen 17 gespült, um die Flächen von Lackierrückständen zu reinigen. Die Düsen zur Reinigung der Bodensegmente sind mit 16 bezeichnet, und die Düsen zur Reinigung der vertikal angeordneten Segmente sind mit 17 bezeichnet. Die Bodenfläche 2 wird mittels einer im unteren Teil der Lackierkabine angeordneter Sprühvorrichtung 18, die über die Leitung 29 mit der Sprühvorrichtung 15 verbunden ist, mit Kreislaufwasser-Overspray-Gemisch und/oder Frischwasser überflutet. Das im Beflutungswasser aufgefangene Overspray 13 gelangt über die Pumpe 19 und die Leitung 20 in den Inline-Dispergierer 21. Der Inline-Dispergierer 21 dient der Homogenisierung des Overspray-Kreislaufwasser-Gemisches und der temporären Stabilisierung des Gemisches. Das homogenisierte Overspray-Kreislaufwasser-Gemisch wird vom Dispergierer 21, falls notwendig, in die Entspannungskammer 22 geleitet, die mit Prallblechen 23 ausgerüstet ist. Die in der Entspannungskammer 22 abgetrennte Luft und die abgetrennten gasförmigen Bestandteile werden über den Unterdruckerzeuger 24 in die Abluft der Auffangvorrichtung 1 eingeschleust. In die Entspannungskammer 22 und gegebenenfalls auch in die Zuleitung 20 zum Inline- Dispergierer kann ein Entschäumermittel eindosiert werden. Dies wird jedoch nur bei besonderen Lackiermischungen vorgenommen. Üblicherweise arbeitet das erfindungsgemäße Verfahren ohne alle Zusätze, da der zurückgewonnene Rohlack dem frischen Lackiermaterial wieder zugemischt werden soll.

Die Entspannungskammer 22 ist mit einer Pumpe 25 verbunden, die über Verteilerventile 26 und 26a das abgezogene Gemisch auf die Leitungen 27 und 28 verteilt. Beim Anfahren des Spritzverfahrens wird der größte Teil des Gemisches über die Leitung 27 in die Auffangvorrichtung 1 und damit in den Kreislauf zurückgeführt. Ein Teilstrom des seitlich aus der Entspannungskammer 22 abgezogenen Overspray-Kreislaufwasser-Gemisches wird über die Leitung 28 in die Rückgewinnungseinheit, die insgesamt mit 30 bezeichnet ist, geleitet. Der Teilstrom des Overspray-Kreislaufwasser-Gemisches gelangt über die Leitung 28 in den Einlaufsammelbehälter 31 und von dort über die Pumpe 32 in die Filtrationskammer 33. Die der Filtrationskammer 33 zugeleitete Menge des Gemischs wird über die Pumpe 32 gesteuert, die über das Flüssigkeitsniveau im Sammelbehälter 31 angesteuert wird.

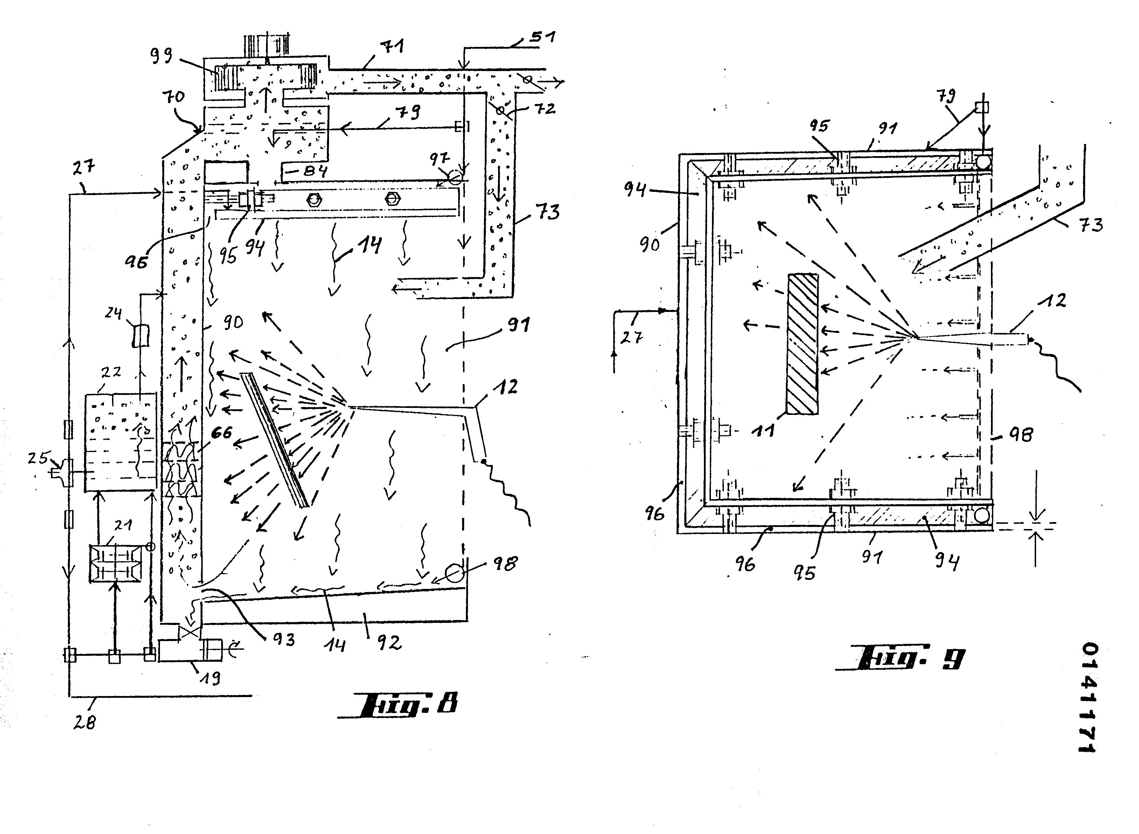

Das zur Spülung der Außenflächen der Segmente der Lackierkabine verwendete Spülwasser wird in einer Bodenwanne 34 gesammelt und über die Leitung 35 dem Spülwasser-Sammelbehälter 36 zugeleitet. An den Spülwasser-Sammelbehälter 36 ist eine Pumpe 37 angeschlossen, die mit der Pumpe 32 des Sammelbehälters 31 in Verbindung steht (vgl. Fig. 1). Die Filtrationskammer 33 besteht aus verschiedenen hintereinander geschalteten Filtermembranen, die aus anorganischen Füllstoffen zusammengesetzt sind, wobei die feinteiligen Füllstoffe Hohlräume eines Durchmessers von 0,001 bis 0,05 µm aufweisen. Die feinteiligen Füllstoffe werden durch Epoxydharze oder durch halogenierte Kohlenwasserstoffpolymerisate zu einer Filtermembran 39 zusammengehalten, wobei die Stützgewebe zur Fixierung der Membran und als Vorfilter verwendet werden können. Es ist auch möglich, Filtermembranen aus Gemischen von organischen und anorganischen Füllstoffen zu verwenden. Es ist aber auch möglich, Filtermembranen aus organischen Füllstoffen zu verwenden. Der Aufbau der Filtermembranen ist in der Fig. 6 wiedergegeben. Die äußere Struktur der Füllstoffe kann unterschiedlich ausgebildet sein, z.B. zylinderförmig, flach, eckig und/oder schlauchförmig. Die einzelnen Füllstoffteilchen sind mit 40 und die Hohlräume in den Teilchen mit 41 bezeichnet. Die Membran 39 kann Füllstoffe der verschiedensten äußeren Gestalt enthalten. Die Füllstoffteilchen 40 werden beim Verpressen zur Membranherstellung zu einer dichten Packung ausgerichtet. Die Matrix für die Füllstoffe aus Epoxydharz oder halogeniertem Kohlenwasserstoff ist mit 42 bezeichnet.

Das Stützgewebe 43 besteht aus einem formstabilen Kunststoff, z.B. Polyamid oder Edelstahl.

In den Filterkammern wird ein ständiger Kreislauf mittels einer Hochdruckpumpe aufrechterhalten, um die Verstopfung der Poren der Füllstoffe zu vermeiden. Bei dem Durchleiten des Overspray-Kreislaufwasser-Gemisches durch die Filtereinheit konzentriert sich das Gemisch zum Rohlack auf.

Der Rohlack wird dann über die Sammelleitung 45 in die insgesamt mit 50 bezeichnete Meßstrecke eingeleitet, wobei der Austritt des Rohlacks aus den einzelnen Abteilungen der Filtrationskammer von der Grobfiltrierung bis Feinfiltrierung durch das Zentralventil 46 gesteuert wird. Die mit Kreisen gekennzeichneten Leitungen können auch als Spülleitungen verwendet werden.

Beim Durchleiten des Overspray-Kreislaufwasser-Gemisches durch die Hohlräume der Füllstoffe tritt das Klarwasser nach außen aus und wird am Ende der Feinfilterkammer 44 der Filtrationskammer 33 über die Leitung 47 abgezogen und im Klarwasser-Sammelbehälter 48 gesammelt. Die Membranen in den Filtrationskammern können mit den vorhandenen Leitungen von beiden Seiten, d.h. von innen und von außen, rückgespült werden. Das rückgewonnene Klarwasser wird über die Leitung 49 in die Auffangvorrichtung 1 zum Überspülen der Lackierwandelemente eingeleitet. Zum Ausgleich des verbrauchten Kreislaufwassers wird Frischwasser über die Leitung 51a in den Sammelbehälter 48 eingeleitet. Das Frischwasser kann auch direkt über die Leitung 51 in die Auffangvorrichtung 1 eingeleitet werden.

Ein Teil des aus der Filtrationskammer abgezogenen Klarwassers kann, statt in das System zurückgeführt, auch in die Kanalisation abgeleitet werden.

Der aus der Filtrationskammer abgezogene Rohlack wird der Meßstrecke 50 zugeführt, wo die Durchflußmenge in der Meßeinheit 51, das spezifische Gewicht des Rohlacks über die Meßeinheit 52, der Brechungswinkel bzw. Tyndall-Effekt über die Meßeinheit 53, die Viskosität über die Meßeinheit 54, der pH-Wert über die Meßeinheit 55 und die Leitfähigkeit des Rohlacks über die Meßeinheit 56 gemessen wird und mit den entsprechenden Werten des frischen Lackiermaterials 57 verglichen wird. Über die erhaltenen Meßdaten der Meßein-

- 14 -

0141171

heiten 51 und 52 wird das Zentralventil 46 gesteuert. Über die Meßdaten der Meßeinheiten 54, 55 und/oder 56 wird das Mischaggregat 58 mittels einer Sonde 64 gesteuert. An die Meßeinheit 53 sind ein Inline-Dispergierer 59 und eine Pumpe 60 für die Feinsiebung 61 angeschlossen. Der Rohlack wird aus dem Rühraggregat 58 abgezogen und über den Inline-Dispergierer 59, die Pumpe 60 und, falls notwendig, über ein Feinsiebaggregat 61 zur Abtrennung von Festkörpergroßteilen dem Mischbehälter 62 zugeleitet, wo das rückgewonnene Lackiermaterial mit frischem Lack vermischt wird. Es ist jedoch je nach Konsistenz des rückgewonnenen Lackiermaterials möglich, das Material vom Rühraggregat 58 direkt in den Mischbehälter 62 einzuleiten unter Auslassen des Inline-Dispergierers 59 und/oder des Feinsiebes 61. Das Mischungsverhältnis zwischen rückgewonnenem Lackiermaterial und frischem Lackiermaterial richtet sich nach der Ausbringmenge an der Spritzdüse 12. Das Mischungsverhältnis von Frischlack zu wiedergewonnenem Lackiermaterial liegt insbesondere bei 10:1 bis 1:10, vorzugsweise bei etwa 1:1. Das Mischungsverhältnis von 1:1 entspricht etwa einer mittleren Oversprayrate von 50 %.

Der Mischbehälter 62 steht über die Leitung 63 in Verbindung mit der Sprühdüse 12.

Die Abluft aus der Lackierkabine wird über die am Bodenteil der Lackierkabine angeordnete Absaugkammer 65 abgesaugt und dann durch den Rückspüler 66 geleitet. Der Rückspüler besteht aus einem Wirbelwäscher. In ihm wird der größte Teil des Oversprays 13 von der Abluft abgetrennt.

- 15 -　　　　　　　　0141171

Die mit Overspray vermischte Abluft wird dann in ein Naßnachfilter, das insgesamt mit 70 bezeichnet ist, geleitet. Im Naßnachfilter wird die Abluft von Oversprayresten gereinigt. Die gereinigte Luft geht dann über die Leitung 71 und die Drosselklappe 72 über die Leitung 73 in die Auffangvorrichtung zurück. Ein Teil der gereinigten Abluft kann auch über die Drosselklappe 74 ins Freie geleitet werden.

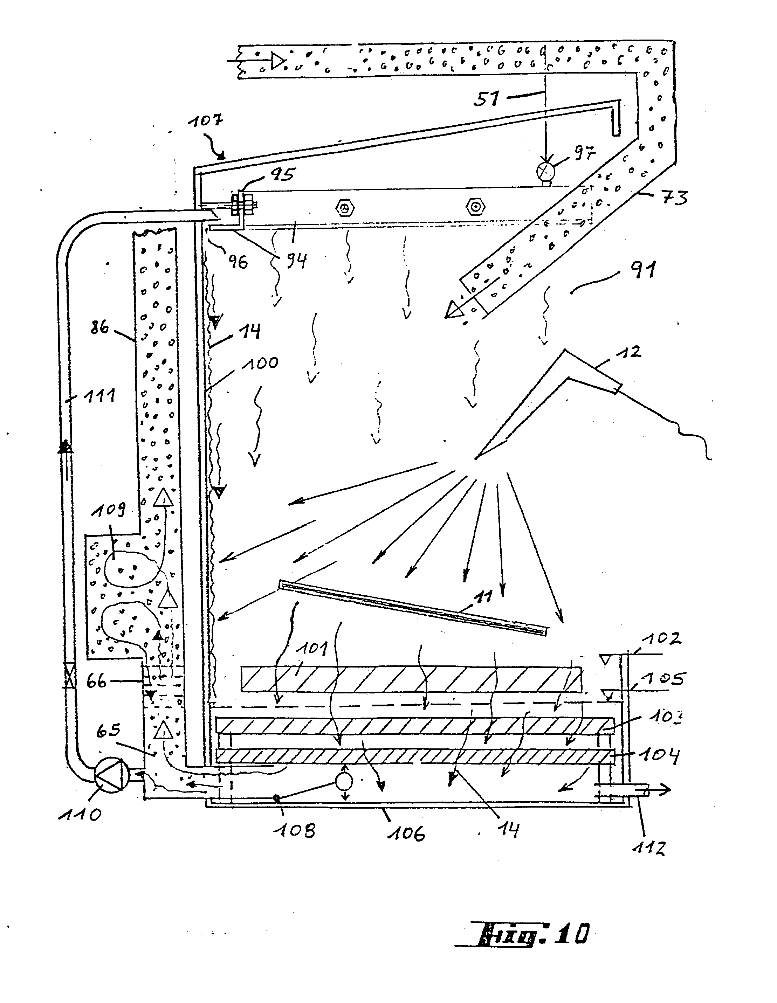

Das Naßnachfilter ist in Fig. 7 detailliert dargestellt. Das Naßnachfilter besteht aus einem unteren Kondensationsraum 75 und einem oberen Kondensationsraum 76. Die Abluft wird seitlich in den unteren Kondensationsraum eingeführt, wie in Fig. 7 in Pfeilrichtung dargestellt. Der Ablufteinlaß ist mit 77 bezeichnet. Die Abluft tritt dann durch das oberhalb des Einlasses angeordnete Grobfilter 78 hindurch. Das Grobfilter besteht vorzugsweise aus Glasfasermaterialien und wird von oben mit Spülwasser mittels einer Sprühvorrichtung 79 besprüht. Oberhalb der Sprühvorrichtung 79 ist ein mittleres Feinfilter 80 angeordnet, das vorzugsweise aus Glasfasermaterialien besteht. Nachdem die Abluft das mittlere Feinfilter 80 durchquert hat, stößt sie gegen die Kondensatabschlagplatte 81, wo die letzten Reste an Overspray von der Abluft abgetrennt werden. Oberhalb der Kondensatabschlagplatte ist vorzugsweise noch ein oberes Feinfilter 82 vorgesehen, das als Trockenfilter ausgebildet ist. In dem oberen Feinfilter werden die letzten Reste des Oversprays aus der Abluft abgetrennt. Die gereinigte Abluft wird dann über die Leitung 71 ins Freie geleitet bzw. in die Auffangvorrichtung 1 zurückgeleitet. Am Boden 83 des Naßnachfilters wird das eingesprühte Wasser mit dem aus der Abluft abgetrennten Overspray gesammelt und über die Leitung 84 in das Kreislaufwasser zurückgeführt. Die Leitung 84 ist vorzugsweise mit einem Rückschlagventil 85 ausgerüstet. Die Kondensationsabschlagplatte 81 besteht vor-

0141171

zugsweise aus Edelstahl und ist mit Durchschlagsbohrungen 86 ausgerüstet.

Zu Beginn des Sprühvorganges wird das Naßnachfilter 70 über die Leitung 79 geflutet. Die sich im Naßnachfilter sammelnde Flüssigkeit fließt über die Abluftsammlerleitung 86, die Wirbelwäscheranlage 66 und die Ablaufansaugkammer 65 in die Pumpe 19 und wird so dem Kreislaufwasser zugemischt. Vor Beginn des Lackiervorganges werden die Seitenflächen der Lackierkabine mit Wasser überspült, und das nach dem Beginn des Lackiervorganges ablaufende Overspray-Kreislaufwasser-Gemisch wird über die Pumpe 19, die Leitung 20, den Inline-Dispergierer 21 und, falls nötig, über die Entspannungskammer 22, die Pumpe 25, die Leitung 27 in den Abluftsammler 86 geleitet. Während der Anlaufphase des Verfahrens bleibt das Verteilerventil 26a für die Leitung 28 geschlossen, bis das Overspray-Kreislaufwasser-Gemisch sich auf eine Overspraymenge von etwa 20 % durch die Kreislaufführung aufkonzentriert hat. Erst wenn diese Overspraykonzentration im Gemisch erreicht ist, wird das Verteilerventil 26a geöffnet und das Overspray-Kreislaufwasser-Gemisch über die Leitung 28 in den Sammelbehälter 31 geleitet.

Die erfindungsgemäße Vorrichtung hat den Vorteil, daß der Farbton der zu versprühenden Lackiermaterialien oder auch die Art des zu versprühenden Lackiermaterials gewechselt werden kann, ohne daß zeitaufwendige Umbauten vorgenommen werden müssen. Bei Farbtonwechsel bzw. Materialwechsel wird die Zuführung von "altem" Frischlack aus dem Liefergebinde (in der Fig. 1 nicht dargestellt) in die Mischkammer 62 unterbrochen. Die Mischkammer 62 fördert das weiter anfallende "alte" aufbereitete Lackiermaterial währenddessen in den Frischlackcontainer und spült zum Schluß auch das restliche Spülwasser aus der Rückgewinnungseinheit 30 in den gleichen Frischlackcontainer oder in

0141171

einen gesondert angeordneten Container. Nachdem der Vorgang beendet ist, wird der Frischlack mit dem neuen Farbton in die Mischkammer 62 geleitet und über die Leitung 63
in die Spritzdüse 12 gefördert. Zum gleichen Zeitpunkt wird
die Verriegelung der Leitung 28 freigegeben,und die Wiedergewinnung des Lackiermaterials des neuen Farbtons aus dem
Overspray beginnt. Für große zu besprühende Objektflächen,
z.B. von 1000 m²/h, die in verschiedenen Farbtönen und
Materialarten  besprüht werden müssen, werden die folgenden Vorrichtungseinheiten vorzugsweise mehrfach, insbesondere dreifach, angeordnet: Rückgewinnungseinheit 30, Entspannungskammer 22, Inline-Dispergierer 21 und Naßnachfilter 70. Die Lackierkabine wird nicht in mehrfacher Ausführung benötigt, da die Kabine durch die drehbaren Segmente 3
sofort für einen Sprühvorgang mit einem neuen Farbton eingesetzt werden kann, indem die Wandflächen  durch Verdrehen
der Einzelsegmente für den neuen Sprühvorgang bereitgestellt
werden können. Die von der Innenseite der Lackierkabine weggedrehten Wandflächen der Einzelsegmente werden sofort nach
dem Drehvorgang von der Rückseite durch Bespülung mit Wasser gereinigt,so daß die entsprechend gereinigte Wandfläche
4 bzw. 4a bzw. 4b als Auffangfläche für einen Lackiersprühvorgang verwendet werden kann.

Fig. 8 zeigt eine Ausgestaltung der erfindungsgemäßen Vorrichtung, bei der die Auffangvorrichtung für Overspray aus
glatten, befluteten Ablaufflächen besteht und wobei die
vertikal angeordneten Ablaufflächen mittels eines verstellbaren Dosierspalts mit Wasser beflutet werden. Die glatte
Rückwandablauffläche ist mit 90 und die glatte seitliche
Ablauffläche ist mit 91 bezeichnet. Der Boden ist mit 92 bezeichnet. Der Boden 92 ist geneigt angeordnet, so daß das
von den vertikalen Ablaufflächen ablaufende Wasser an der
Rückwand 90 durch einen dort angeordneten Schlitz 93 zur
Pumpe 19 ablaufen kann. Von dort wird das Overspray-Kreislaufwasser-Gemisch, wie in Fig. 1 dargestellt, über den Inline-Dispergierer 21 und gegebenenfalls über die Entspannungskammer 22, die Pumpe 25, die Leitung 27 auf die Beflutungsrinne 94 gefördert. Die Beflutungsrinne 94 kann durch den Vorschub 95 an die Rückwand 90 herangeführt werden. So wird die Breite des Ablaufspalts 96 eingestellt. Das Klarwasser zum Spülen der Wandflächen wird über die Leitung 51 geführt und über das Rohr 97 der Beflutungsrinne 94 bzw. über das Einspeisungsrohr 98 der Bodenplatte 92 zugeführt. Die Spülwasserzuführung über die Leitung 79 in das Naßnachfilter 70 erfolgt wie bei Fig. 1 beschrieben.

Zwischen das Naßnachfilter 70 und die Abluftleitung 71 kann ein Ventilator 99 geschaltet sein, der die Abluft in die Abluftleitung 71 saugt. Die übrigen Vorrichtungsteile sind analog zur Vorrichtung gemäß Fig. 1 ausgebildet. Es wird daher auf die entsprechenden Ausführungen zu Fig. 1 Bezug genommen.

Fig. 9 zeigt eine Draufsicht auf die Lackierkammer gemäß Fig. 8, wobei nur die wichtigsten Teile der Lackierkammer zeichnerisch dargestellt sind.

Fig.10 zeigt eine besondere Ausgestaltung der Auffangvorrichtung 1, bestehend aus einer Halb-Naßkabine. Die Halb-Naßkabine ist in der gleichen Weise aufgebaut wie die Lackierkabine gemäß Fig. 3 mit festen seitlichen glatten Auffangflächen 91 und einer glatten Ablauffläche für das Kreislaufwasser an der Rückwand. Die Rückwand ist mit 100 bezeichnet. Die Seitenwände und die Rückwand werden über die Beflutungsrinne 94, die einen Beflutungsspalt 96 mit den Seitenflächen bzw. der Rückwand bildet, mit Wasser beflutet. Die Einstellung der Breite des Beflutungsspaltes geschieht über einen Vorschub 95. Auf dem Boden 106 der Kabine ist ein Filter angeordnet, das aus mehreren übereinander angeordneten, auswechselbaren Filterkassetten besteht.

Die Filterkassetten bestehen insbesondere aus Glasfasergewebe, Polyesterfüllmaterial und/oder Polyurethanfüllmaterial. Die im Bodenteil als oberste Kassette angeordnete Filterkassette 101 ist eine Kassette, die vorzugsweise als Trockenkassette eingesetzt wird und die aus einem
Glasfasermaterial besteht. Die oberste Filterkassette 101
bleibt während des Lackiervorganges unbeflutet. Es besteht
jedoch die Möglichkeit, sofern die Filterkassette 101 in
der Lackierkabine nach der Beendigung des Lackiervorganges
verbleiben soll, diese mit Wasser zu befluten, um ein Antrocknen der Lackiermaterialreste zu verhindern. Die Beflutung kann über einen Wasserstandsgeber 102 vorgenommen
werden.  Unter der Filterkassette 101 ist eine ebenfalls
auswechselbare Filterkassette 103 und darunter eine ebenfalls auswechselbare Filterkassette 104 angeordnet. Die
Filterkassetten 103 und 104 werden während des Lackiervorganges über den Wasserstandsgeber 105 mit Wasser beflutet und verhindern somit den Durchtritt des größten
Teils des in der angesaugten Abluft vorhandenen Oversprays.
Das Overspray wird an das Beflutungswasser 14 abgegeben.
Am Boden 106 der Lackierkabine, die insgesamt mit 107 bezeichnet ist, ist ein Schwimmventil 108 zur Regulierung
des Gemisches von abgesaugter Luft und Wasser vorgesehen.
Die Abluft wird über eine Absaugkammer 65 und den Wirbelwäscher 66 in die Abluftleitung 86 geleitet, wobei hinter
dem Wirbelwäscher noch eine Luftwirbelkammer zur Befreiung
der Absaugluft von mitgerissenem Wasser eingesetzt sein
kann. Die gereinigte Abluft wird der Lackierkabine dann
wieder über die Leitung 73 zugeführt. Die Luftwirbelkammer
in der Abluftleitung ist mit 109 bezeichnet. Das am Boden
106 gesammelte Beflutungswasser wird über die Pumpe 110
und die Leitung 111 auf die Beflutungsrinne 94 geleitet.
Diese Kreislaufführung ist für die Anlaufphase des Lackierverfahrens vorgesehen. Nachdem sich das Overspray-Kreislaufwasser-Gemisch mit Overspray bis etwa 20 % angereichert hat, wird das angereicherte Overspray-Kreislaufwasser-
Gemisch über einen am Boden 106 der Lackierkabine angeordneten Auslaß 112 in die Leitungen 28 bzw. 35 geleitet,
von wo das Gemisch dann in die Sammelbehälter 31 bzw. 36
gefördert wird und der Rückgewinnung des Rohlacks unterzogen wird. Der Vorteil der Halb-Naßkabine gemäß Fig. 10
besteht darin, Kleinteile oder Teile von besonderer Gestalt neben dem Hauptlackierverfahren, und zwar gleichzeitig manuell oder automatisch,zu lackieren oder andere
Materialien in kleiner Serie lackieren zu können und damit eine günstigere Elastizität der Betriebsabläufe zu
erreichen.

0141171

Verfahren zur Rückgewinnung von
Lackiermaterial aus dem beim Spritzlackieren entstehenden Overspray
und Vorrichtung zur Durchführung des
Verfahrens

---

Ansprüche

1. Verfahren zur Rückgewinnung von Lackiermaterial aus
   dem beim Spritzlackieren entstehenden Overspray,
   d a d u r c h   g e k e n n z e i c h n e t ,   daß
   man das Overspray mittels einer Auffangvorrichtung (1,107),die
   mit im Kreislauf geführtem Wasser beflutet ist, auffängt, das Kreislaufwasser-Overspray-Gemisch aufkonzentriert,
   in   einem Sammelbehälter sammelt, einer Filtrationskammer (33) zur Auftrennung des Kreislaufwasser-Overspray-Gemisches in Rohlack und Wasser zuleitet, das zurückgewonnene Wasser in den Kreislauf zurückführt, den rückgewonnenen Rohlack einer Meßstrecke (50) zur Messung der physikalischen Eigenschaften des rückgewonnenen Rohlacks und zum Vergleich mit den physikalischen Eigenschaften des frischen Lackiermaterials zuleitet, die Konsistenz des Rohlacks in einem Aufbereitungsaggregat (58, 59, 60) gemäß den in der Meßstrecke (50) ermittelten Daten einstellt und den so aufbereiteten Rohlack dem zu versprühenden frischen Lackiermaterial zum gleichen Anwendungszweck zumischt.

2. Verfahren nach Anspruch 1, dadurch gekennzeichnet, daß man in der Filtrationskammer (33) das Wasser vom Rohlack trennt und den Rohlack einem Meßaggregat (50) zuleitet, in der die Dichte bzw. das spezifische Gewicht des die Filterkammer verlassenden Rohlacks gemessen und mit den entsprechenden Werten des frischen Lackiermaterials verglichen wird und dann über ein an sich bekanntes Ventil die Austrittsmenge an Rohlack aus der Filtrationskammer (33) eingestellt wird.

3. Verfahren nach Anspruch 2, dadurch gekennzeichnet, daß man den die Filtrationskammer (33) verlassenden Rohlack einem Meßaggregat (54 bzw. 55) zuleitet, um den Brechungsindex bzw. den Tyndall-Effekt des Rohlacks zu messen, dann die so erhaltenen Werte mit den entsprechenden Werten des frischen Lackiermaterials vergleicht und dann einen nachgeschalteten Inline-Dispergierer (59) und/oder ein Feinsieb (61) so steuert, daß das in das Mischgefäß (62) eingeleitete zurückgewonnene Material in seiner Feinheit der Feinheit des zugemischten frischen Lackiermaterials entspricht.

4. Vorrichtung zur Durchführung des Verfahrens nach den Ansprüchen 1 bis 3, dadurch gekennzeichnet, daß die Auffangvorrichtung (1) aus Wandflächen besteht, die gebildet werden aus verdrehbaren Segmenten (3),oder aus durchgehenden, glatten, nicht drehbaren Wandflächen (90,
91, 100).

5. Vorrichtung nach Anspruch 4, dadurch gekennzeichnet,
   daß die drehbaren Segmente aus nebeneinander angeordneten dreieckigen Kassetten mit Wandflächen (4, 4a, 4b)
   bestehen, wobei die Stoßkanten der Wandflächen über
   Kantenabdichtungen (5) abgedichtet sind.

6. Vorrichtung nach Anspruch 4, dadurch gekennzeichnet,
   daß die drehbaren Segmente (3) über eine Antriebswalze
   synchron verdreht werden können.

7. Vorrichtung nach Anspruch 4, dadurch gekennzeichnet,
   daß die Seitenwände und Bodenfläche der Lackierkabine
   aus den drehbaren Segmenten (3) gebildet werden, wobei
   die Segmente vollständig mit im Kreislauf geführtem
   Wasser überflutet werden.

8. Vorrichtung nach Anspruch 4, dadurch gekennzeichnet,
   daß die fest angeordneten Seitenflächen (90, 91, 100)
   der Lackierkabine mittels eines Beflutungsspalts (96)
   und die Bodenfläche (92), die geneigt angeordnet ist,
   mittels eines Sprühaggregats (98) überspülbar sind.

9. Vorrichtung nach Anspruch 4, dadurch gekennzeichnet,
   daß im Bodenteil der Auffangvorrichtung (1) mindestens
   drei übereinander angeordnete Filterkassetten (101, 103,
   104) angeordnet sind, wobei die oberste Filterkassette
   aus einer Trockenkassette und die darunter angeordneten
   Filterkassetten aus Naßfilterkassetten bestehen.

10. Vorrichtung nach Anspruch 4, dadurch gekennzeichnet,
    daß man das Kreislauf-Overspray-Gemisch vor der Ein-
    leitung in den Sammelbehälter ( 31 )    durch einen
    Inline-Dispergierer (21) leitet, um die Emulsion und/
    oder Dispersion temporär zu stabilisieren.

11. Vorrichtung nach Anspruch 4, dadurch gekennzeichnet, daß zwischen dem Inline-Dispergierer (21) und dem Sammelbehälter ( 31 ) eine Entspannungskammer (22) vorgesehen ist, die dem Gemisch die gasförmigen Anteile entzieht.

12. Vorrichtung nach Anspruch 4, dadurch gekennzeichnet, daß an die Sammelbehälter ( 31,36 ) eine Filtrationskammer (33) angeschlossen ist, die aus getrennt oder gemeinsam ansteuerbaren Filtrationskammern besteht, die in der Reihenfolge Grobfiltration nach Feinfiltration und umgekehrt benützt und gemeinsam oder getrennt rückspülbar sind.

13. Vorrichtung nach dem vorhergehenden Anspruch, dadurch gekennzeichnet, daß die Filtrationskammern Filtrationsmembranen (39) enthalten, die aus Hohlräumen mit einer Porenweite von 0,05 bis 0,001 µm aufweisenden anorganischen und/oder organischen Füllstoffen bestehen.

14. Vorrichtung nach Anspruch 4, dadurch gekennzeichnet, daß an die Auffangvorrichtung (1) ein Wirbelwäscher (66) und daran anschließend ein Naßnachfilter (70) angeschlossen sind, durch die die mit Overspray (13) belastete Abluft geleitet wird, um den Overspray aus der Abluft abzutrennen und dem Kreislaufwasser zuzuführen.

15. Vorrichtung nach einem der vorhergehenden Ansprüche, dadurch gekennzeichnet, daß die Meßstrecke (50) ein Aggregat zur Messung des Brechungsindex bzw. des Tyndall-Effekts des die Filterkammer (33) verlassenden Rohlacks aufweist.

16. Vorrichtung nach Anspruch 4, dadurch gekennzeichnet, daß die aus den drehbaren Segmenten (3) gebildeten vertikalen Wandflächen mittels im oberen Teil der Lackierkabine angeordneten Sprühvorrichtungen bzw. Sprühleitungen (15, 15a) und die Segmentbodenfläche (2) mittels einer am Bodenteil angeordneten Sprühvorrichtung bzw. Sprühleitung (18) mit Kreislaufwasser-Overspray-Gemisch und/oder mit Frischwasser beflutbar sind.

17. Vorrichtung nach Anspruch 9, dadurch gekennzeichnet, daß die feststehende, nicht drehbare Rückwand (100) der Lackierkabine und die feststehenden, nicht drehbaren Seitenwände (91) mittels der im oberen Teil der Lackierkabine (107) angeordneten Beflutungsspalten (96) und die im Bodenteil der Lackierkabine (107) angeordneten auswechselbaren Filterkassetten (102, 103, 104) mit Frischwasser und/oder Kreislaufwasser-Overspray-Gemisch beflutbar sind.

Fig. 1

**Fig: 2**

**Fig: 3**

**Fig: 4**

**Fig: 5**

0141171

Fig. 6

Fig. 7

0141171

0141171

Fig. 9

Fig. 8

0141171

_Fig. 10_